Europäisches Patentamt

European Patent Office

Office européen des brevets

(19)

(11) Publication number: **0 255 956**
**A2**

(12) **EUROPEAN PATENT APPLICATION**

(21) Application number: **87111410.4**

(22) Date of filing: **06.08.87**

(51) Int. Cl.4: **C09K 19/58 , C09K 19/56**

(30) Priority: **07.08.86 JP 185448/86**

(43) Date of publication of application:
**17.02.88 Bulletin 88/07**

(84) Designated Contracting States:
**CH DE FR GB LI**

(71) Applicant: **Sato, Hisato**
**3-23-22, Tabata**
**Kita-ku Tokyo(JP)**

(72) Inventor: **Sato, Hisato**
**3-23-22, Tabata**
**Kita-ku Tokyo(JP)**

(74) Representative: **Wächtershäuser, Günter, Dr.**
**Tal 29**
**D-8000 München 2(DE)**

(54) **P-Type liquid crystal composition.**

(57) A novel P-type liquid crystal composition comprising N-dimethyl-4-aminobenzonitrile.

The composition permits decreasing either or both of $V_{th}$ and $\gamma$ values, so that it is advantageously applicable to liquid crystal display elements.

EP 0 255 956 A2

## P-TYPE LIQUID CRYSTAL COMPOSITION

**BACKGROUND OF THE INVENTION**

1) Field of the Invention

The present invention relates to liquid crystal compositions, more particularly to P-type liquid crystal compositions comprising N-dimethyl-4-aminobenzonitrile.

2) Description of the Prior Art

Twisted nematic liquid crystal elements utilized as liquid crystal display devices are divided, by their driving circuit types, into statically driven and dynamically driven types. With diversified development of LCDs, time division driving has become predominant over other driving methods, and their duty ratios were decreasing from 1/2, 1/4 or 1/8 to 1/16, 1/32, 1/64 or 1/128. These trends have resulted in renewed recognition of importance of the steepness ($\gamma$ level) of liquid crystal.

Conventionally, liquid crystal compositions are based on a mixture prepared e.g. from N-type components such as liquid crystalline cyclohexane carboxylate esters, weak P-type components such as phenylcyclohexyl (P.C.H.) type liquid crystals, biphenyl type liquid crystals and cyano-substituted cyclohexane carboxylate type liquid crystals, etc. To meet the requirements for specific uses, the said base compositions are modified by incorporating strong P-type component(s) such as cyanophenyl alkylphenylcarboxylate(s) to regulate their threshold voltages, $V_{th}$, or, when higher NI (Nematic-Isotropic) points are required, by adding polycyclic high NI point liquid crystal(s) such as terphenyl type liquid crystal and biphenylcyclohexyl (B.C.H.) type liquid crystal.

As a general rule for any homologous series of liquid crystal compositions, it was commonly accepted that compositions with higher $V_{th}$ (2 - 3) give better $\gamma$ levels than those with lower $V_{th}$ (1 - 1.5) and, consequently, $\gamma$ levels which permit time division driving would inevitably require higher $V_{th}$ levels.

With regard to the changes of duty ratios, it was also accepted that higher duty levels would require increased voltages to obtain a definite execution voltage.

However, adoption of higher voltages is not preferable and may lead to a problem because of the limitation in resistive voltage of integrated circuits. Therefore, development of a technique permitting the lowereing of $\gamma$ levels of liquid crystal compositions without adopting higher $V_{th}$ levels had been hoped for.

**SUMMARY OF THE INVENTION**

The inventor's wide-ranged investigation into the physical properties of liquid crystal compositions has resulted in a discovery that lower $V_{th}$ levels of liquid crystal compositions can be obtained without affecting, or rather with improvement of, $\gamma$ levels of the original composition.

It is, therefore, an object of the present invention to provide a P-type liquid crystal composition comprising N-dimethyl-4-aminobenzonitrile.

**DETAILED DESCRIPTION OF THE INVENTION AND PREFERRED EMBODIMENTS**

N-dimethyl-4-aminobenzonitrile used in the present invention is a known compound which is easily available e.g. from Aldrich Chemical Company as a commercial product.

The P-tpye liquid crystal composition of the present invention can be prepared by incorporating N-dimethyl-4-aminobenzonitrile to a liquid crystal base composition by usual manner. The liquid crystal base composition used in the invention include all of the composition exhibiting functions characteristic of liquid crystals, and not limitative to P-type liquid crystals. Examples of the liquid crystal base compositions include e.g. those prepared by combination of members selected from liquid crystalline cyanobiphenyl compounds, P-or N-type liquid crystalline dioxane compounds, P-or N-type liquid crystalline pyrimidine compounds, P-or N-type liquid crystalline biphenylcyclohexane compounds, P-or N-type liquid crystalline phenylcyclohexane compounds, P-or N-type liquid crystalline cyclohexane carboxylate esters, cyanophenyl carboxylate esters, etc. As the examples of commercial products, ZLI series liquid crystals such as ZLI 1565 (Merck & Co., Inc.), Ro series liquid crystals such as TN Ro 571 (Hoffmann-La Roche & Co., AG), DOX series liquid crystals such as 030 and 045 (Dai Nippon Ink & Chemicals Inc.), etc., can be mentioned.

Quantity of N-dimethyl-4-aminobenzonitrile in the composition is 0.001 to 20 wt% (hereinafter simply referred to as %), more preferably 0.3 to 5%.

The thus obtained P-type liquid crystal composition permits decreasing either or both of $V_{th}$ and $\gamma$ values as compared with the original liquid crystal composition. Therefore, it is advantageously applicable to liquid crystal display elements.

The present invention is illustrated by the following examples.

**Example 1**

A biphenyl-based liquid crystal composition and a P.C.H.-based liquid crystal composition were used as a base composition, and changes of $V_{th}$ and $\gamma$ values with the addition of N-dimethyl-4-aminobenzonitrile (hereinafter abbreviated as "DMN") were investigated. The results are shown in Table 1.

Table 1

| Liquid Crystal Base Composition | | Biphenyl-based[*] | | P.C.H.-based[**] | |
|---|---|---|---|---|---|
| DMN Quantity | | None | 2 % | None | 2 % |
| Physical Properties | $V_{th}$ 10 % | 1.608 | 1.509 | 1.724 | 1.595 |
| | $\gamma_1$ 50 % / 10 % | 1.1648 | 1.1623 | 1.158 | 1.158 |
| | $\gamma_2$ 90 % / 10 %. | 1.413 | 1.402 | 1.43 | 1.401 |

* TN Ro 571 (Hoffmann-La Roche & Co., AG)

** A formulation supplied by Merck & Co., Inc.

From these results, it is clear that both $V_{th}$ and $\gamma$ values are lowered by the addition of DMN.

**Example 2**

Similarly to Example 1, effect of the added DMN on $V_{th}$ and $\gamma$ levels of phenylcyclohexane carboxylate-based liquid crystal compositions was investigated. The results are shown in Tables 2 and 3.

Table  2

| Liquid Crystal Base Composition | | Base (I)[*] | | |
|---|---|---|---|---|
| DMN Quantity | | None | 0.5 % | 5 % |
| Physical Properties | $V_{th}$  10 % | 1.588 | 1.494 | 1.253 |
| | $\gamma_1$  50 % / 10 % | 1.152 | 1.134 | 1.138 |
| | $\gamma_2$  90 % / 10 % | 1.452 | 1.377 | 1.391 |

Table 3

| Liquid Crystal Base Composition | | Base (II)** | | | |
|---|---|---|---|---|---|
| DMN Quantity | | None | 2 % | 3.5 % | 4 % |
| Physical Properties | $V_{th}$ 10 % | 1.580 | 1.450 | 1.350 | 1.304 |
| | $\gamma_1$ 50 % / 10 % | 1.145 | 1.133 | 1.140 | 1.139 |
| | $\gamma_2$ 90 % / 10 % | 1.406 | 1.371 | 1.387 | 1.391 |

\* Composition of Base (I)

$R_1$ — H — COO — ⬡ — $OR_2$  } 75 %

$R_1$ — H — COO — ⬡ — CN

$R_1$ — ⬡ — COO — ⬡ — CN    17 %

$R_1$ — ⬡ — OCO — H — COO — ⬡ — F    8 %

( wherein $R_1$ and $R_2$ denote $C_1 - C_5$ alkyl groups. )

\*\* Composition of Base (II)

$R_1$ — H — COO — ⬡ — $OR_2$  } 75 %

$R_1$ — H — COO — ⬡ — CN

$R_1$ — ⬡ — COO — ⬡ — CN    17 %

$R_1$ — ⬡ — OCO — H — COO — ⬡ — CN    8 %

( wherein $R_1$ and $R_2$ denote $C_1 - C_5$ alkyl groups. )

As is clear from these results, simultaneous decrease of $V_{th}$ and $\gamma$ values by the addition of DMN is observed also with phenylcyclohexane carboxylate-based liquid crystals.

## Claims

1. A P-type liquid crystal composition comprising N-dimethyl-4-aminobenzonitrile.

2. A P-type liquid crystal composition comprising N-dimethyl-4-aminobenzonitrile and a liquid crystal base composition.

3. A P-type liquid crystal composition according to Claim 1, wherein an amount of N-dimethyl-4-aminobenzonitrile is from 0.001 to 20 wt%.

4. A P-type liquid crystal composition according to Claim 2, wherein the liquid crystal base composition is selected from the group consisting of liquid crystalline cyanobiphenyl compound, P-or N-type liquid crystalline dioxane compound, P-or N-type liquid crystalline pyrimidine compound, P-or N-type liquid crystalline biphenylcyclohexane compound, P-or N-type liquid crystalline phenylcyclohexane compound, P-or N-type liquid crystalline cyclohexane carboxylate ester and cyanophenyl carboxylate ester.